# EUROPEAN PATENT APPLICATION

(11) **EP 2 471 376 A1**
(43) Date of publication of application: **04.07.2012**
(21) Application number: 11000020.5
(22) Date of filing: 04.01.2011
(51) Int. Cl.: A23G 3/36, A23G 1/32, A23L 1/05

(54) **Food product**

(71) Applicant: ETH Zurich, 8092 Zürich (CH)
(72) Inventor: Hanselmann, William, 7000 Chur (CH)

(57) **Abstract**

The invention relates to a method for production of food products, in particular to the production of an agglomerated gel particle food product having a firm hand-held texture but disintegrate upon oral intake without mastication and therefore simulating melting behaviour. Therefore a hand-held agglomerated gel will be produced, comprising at least biopolymers and water, which process comprises
a, mixing the constituents of the food product,
b, inducing a continuous gel network by thermal treatment if constituents do not form a gel network in the first process step a,
c, cooling the gel network to room temperature,
d, disperse this gel into small gel particles,
e, agglomerating these gel particles into a mass.

## Description

The invention relates to a method for production of food products, in particular to the production of an agglomerated gel particle food product having a firm hand-held texture but disintegrate upon oral intake without mastication and therefore simulating melting behaviour.
The invention also relates to such food products.

The term hand-held in the context of the present application refers to the ability of holding a food by hand without leaving perceivable traces on the fingers.

The term melting or disintegration behaviour upon oral intake used in the present invention refers to the dissolution of the aggregated gel particle mass in the mouth, in particular by holding the food product between tongue and the roof of the mouth. The aggregated gel particle mass will then disintegrate by saliva dissolution and
simulate a melting sensation in the mouth. It is frequently desirable to be able to offer a product having a hand-held macrostructure and at the same token melting behaviour upon oral intake, not only in the dessert and confectionary categories but also in the
field of savory to spicy food products.

To have a hand-held structure and oral melting characteristics, corresponding food products to date either include high amounts of crystallized fats, for example in the form of chocolate, or have dry protein/starch networks, for example in the form of extruded dried savory snacks. Food products having relatively high fat and/or low water contents however frequently show undesirable dietetic effects, leading for example to obesity. Moreover, fat based products, like chocolate, show only limited heat resistance. Thus there is a desire for low-calorie and heat resistant products that have hand-held properties, but melt upon oral intake.

EP-A-0151758 for example refers to fat simulating composition, composed of a substantial portion of elongated, irregularly shaped carbohydrate gel particles having a longest axial dimension of up to 250 microns with a mean volume diameter ranging from about 10 microns to about 100 microns; the particles are in a hydrated state so as to have the substantially smooth organoleptic character of an oil emulsion. This fat simulating product is substituted in foods for all or a portion of the fat and/or oil used in that food product.

EP-A-0479126 refers to a low-calory food or foodstuff including chopped gel-particles by a cutter of a neutral, complete coagulum including glucomannan as a main component is disclosed. Foods comprise drinks such as a fruit drink, fluid foods such as a potage, and solid foods in coexistence of a natural polysaccharide or edible emulsifier, such as a jam, a custard pudding and a meat ball. The low-calory foodstuff retains the peculiar touch or taste of a food including the gel-particles.

A dry mix for producing a quick-setting gel (EP-A-0619081) which has a texture which is as desirable as gelatin gels. The mix contains as components agglomerated potassium or sodium alginate, agglomerated calcium salt, sweetening agents, food acids, buffering agents and preferably antioxidant. The sweetening agents can be sugars, intensive sweeteners and/or hydrolyzed starches.

Furthermore WO-A-2008115812 provides aerogel particles having a mean particle size less than 1 micron, products containing the same, processes of making the same, and uses thereof are described. A process of making the particle is also described wherein starting aerogel particles are homogenized or wet milled. The starting aerogel particles can be surface treated during the milling process to prevent agglomeration or aggregation. The aerogel particles can be used in a variety of products and applications.

To date, food products with a weak continuous gel network structure show melting behaviour in the mouth, for example gelatin based gels, but are not hand-held and have to be eaten by a spoon or other silverware.

Moreover, gelatin gels for example are not heat resistant. On the other hand, gels with a strong continuous gel network and low moisture content, for example Gummibärchen (Haribo), are hand-held but do not melt nor disintegrate in the mouth without chewing action. Furthermore, calorie content of such products is rather high.

Thus there is a need for low calorie and heat resistant food products that are hand-held but show melting or disintegration behaviour upon oral intake.

### SUMMARY OF THE INVENTION

The object of the present invention is to create a method for production of food products, in particular to the production of an agglomerated gel particle food product having a firm hand-held texture but disintegrate upon oral intake without mastication and therefore simulating melting behaviour. The object is solved by features of claim 1.

A further object is to create such food products with low calorie content and high heat resistance, exhibiting hand-held and oral melting characteristics.

The present invention now provides a food product with small gel particles, which are held together to a firm macrostructure, by for example adhesion-, pressure-, capillary forces. This macrostructure can be hand-held but disintegrates into small gel particles by saliva upon oral intake, simulating melting characteristics.

Thus the invention relates to a method, which makes it possible to produce such food products, having an agglomerated gel particle microstructure.

Gel particles include biopolymers exhibiting gelling properties as well as other constituents, which are selected from nutrients, structure-forming agents, flavorings, aromas, coloring and/or dietary and non-dietary fibers. Additionally, gel particles may include sub-microstructures such as oil droplets and/or insoluble particles and/or air bubbles.

In particular, this microstructure is one, which is obtained by, or is obtainable by, mixing the constituents of the food product, inducing a gel network, grinding to small gel particles and agglomerating gel particles to a hand-held macrostructure.

Surprisingly, such a macrostructure will disintegrate by saliva upon oral intake and closely simulates melting sensation in the mouth, for example similar to a chocolate.

Since the structural development of the termed aggregated gel particle mass and its function in the context of the present invention can be assigned to the different arrangement of the gel particles, either in the atmosphere as a compact solid body (hand-held) or in an aqueous environment as disintegrated or dissolved gel particles (mouth), it can be considered the most essential function of the invented food products.

### BRIEF DESCRIPTION OF THE FIGURES

Fig. 1: shows schematically the scope of the invention
Fig. 2: shows the difference in storage modulus of a continuous gel and an agglomerated gel particle mass made of the continuous gel
Fig. 3: shows the difference in normal force upon compression of a continuous gel and an agglomerated gel particle mass made of the continuous gel
Fig. 4: shows the difference in viscosity upon shearing of a continuous gel and an-agglomerated gel particle mass made of the continuous gel
Fig. 5: depicts the particle size distribution of a typical agglomerated gel particle mass
Fig. 6: shows a micrograph of in water-dispersed particles of a typical agglomerated gel particle mass
Fig. 7: shows an agglomerated gel particle mass before (7a) and after (7b) a heat resistance test
Fig. 8: shows the difference of a continuous gel (right) and an agglomerated gel particle mass (left) before (Fig. 8a) and after (Fig. 8b) dissolution experiments.

### DETAILED DESCRIPTION OF THE EXEMPLARY EMBODIMENTS

Biopolymers in the context of the present application refer to polymers made of the edible polymeric building blocks occurring in nature. Primarily, this term comprises all types of proteins occurring in foodstuffs, which are in particular, milk proteins, but if appropriate, also are egg proteins or proteins of plant origin. In addition to proteins, recipes of the inventive food products generally also comprise other constituents to be counted as biopolymers, more precisely, in particular, structure-forming agents in the form of polysaccharides, which are considered also to include the majority of hydrocolloids suitable to foodstuff purposes. Example of suitable hydrocolloids, which may be mentioned are products such as xanthan, carrageenan or various plant gums, while other polysaccharide constituents which may be mentioned are in particular starches or cellulose or cellulose derivatives, for example cocoa starches or a microcrystalline cellulose of food quality. The content of biopolymers is generally in the range of 0.01 - 35 % by weight.

The aqueous contents are introduced into the food products generally as water or as aqueous solutions, in particular milk or fruit juices. The content of water, in the starting mixture can vary over a wide range and is generally in the range of 30-95% by weight.

In addition to the constituents, which can be termed functional ingredients as structure building biopolymers and water, the food product generally further comprise customary other constituents which promote the food properties and /or consumer properties of the food product. Without any claim as to completeness, these constituents include nutrients, for example fats and sugars, flavorings and aromas, for examples sugars, sugar aromas, fruit aromas, alcohol or alcohol aromas, fruit extracts, salt, spicing and seasonings and similar customary constituents. In addition, food constituents can be present which, depending on their function, can be termed thickeners, structure-forming agents or dietary and non-dietary fibers, and, obviously, the products can also comprise natural, nature-identical or synthetic colorings and other food additives, as are customary for food products of the inventive type. It is in addition provided that piece-formed constituents, for example fruit, vegetable, nuts, meat and/or fish pieces, can also be added to the various food products which can be prepared accordingly to the invention.

It has been found that food products, which are obtained from known recipes showing hand-held but no oral melting behaviour, can be transformed by structural rearrangement according to the present invention and given the melting characteristics in the mouth.

The physical building up of the present aggregated gel particle mass structure can take place in different ways.

On avenue is to generate a conventional, continuous gel network. Such a gel is then broken up into small gel particles in a mill, a blade mixer or other appropriate process units. During the grinding process, little amounts of liquid might be optionally injected for additional smoothness and better oral disintegration of the final product. In the case of injecting a crystallizing fat, the resulting aggregated gel particle mass will have a firmer macrostructure. The gel particles are then pressed together under pressure to form a firm hand-held macrostructure. Depending on the applied pressure, a softer or firmer macrostructure can be generated. Particle-particle interaction forces like adhesion forces, pressure forces or capillary forces keep the gel particles together. The gel particles have to be compressed together to such a degree, that they do not stick to the fingers. Moreover, gel structure has to be in such a way that it does not leave any liquid traces on fingers.

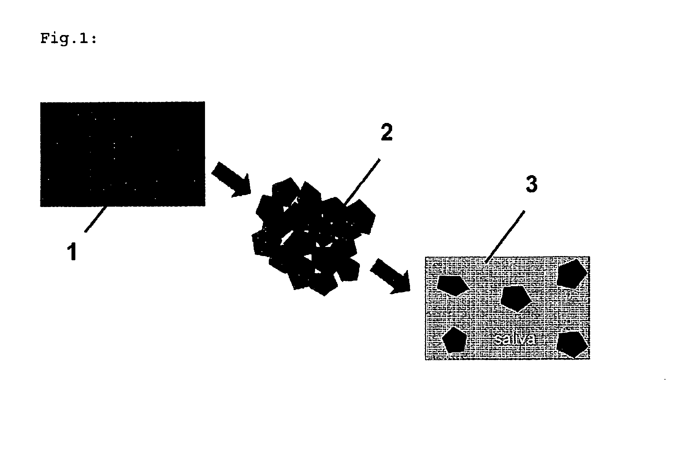

Surprisingly, the agglomerated gel particle mass disintegrates easily in an aqueous solution like for example in saliva. Fig. 1 shows systematically the difference between a conventional, continuous gel network 1 on the left side and the present invention as (hand-held) agglomerated gel particle mass 2 in the middle and as disintegrated gel particles 3 upon oral intake simulating melting characteristics (on the right).

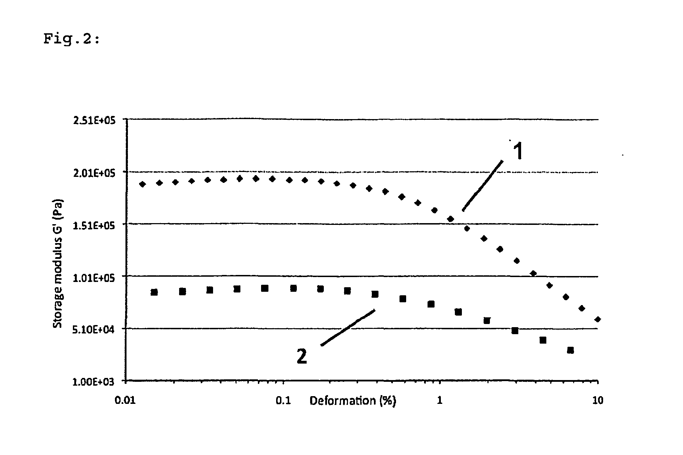

Fig. 2 shows the different storage moduli between a conventional, continuous gel 1 and an aggregated gel particle mass 2, made exactly from the same basic conventional continuous gel as a starting gel.

The continuous gel 1 shows a higher storage modulus then the aggregated gel particle mass 2. At the same token, both samples can be considered solids since the viscoelastic region lies below 1% deformation. The measurements are taken by a MCR 300 Physica rheometer with rippled plate/plate geometry at 1 Hz.

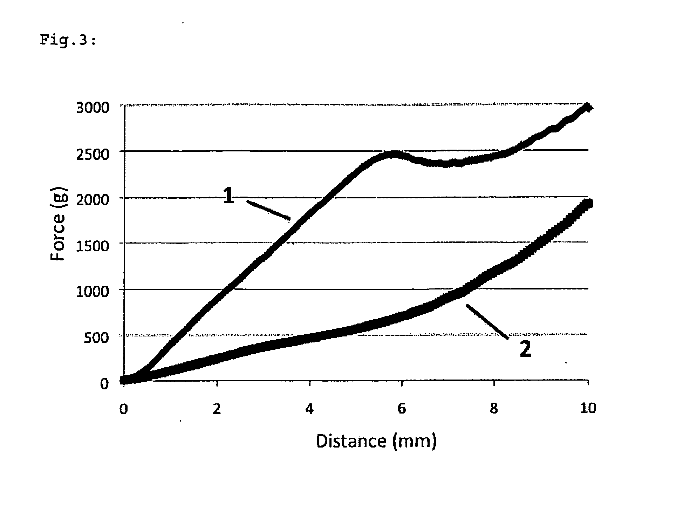

Fig. 3 depicts the normal force required of a 20 mm cylinder with a penetration speed of 3 mm/s, measured with a TX2 TA Instrument. Size and shape identical samples of a conventional continuous gel 1 and an agglomerated gel particle mass 2 made exactly from the same basic conventional continuous gel as a starting gel, were examined. At around 5.5 mm penetration depth, the continuous gel starts to break at around 2500 grams whereas the invention never brakes and shows a flowing behaviour and a 5 times lower value at 5.5 mm. It shows the fundamental structural difference between the two gel types. The invention shows flow behaviour and a much softer texture whereas the conventional gel consists of a continuous gel network 1, which just brakes at a certain applied force.

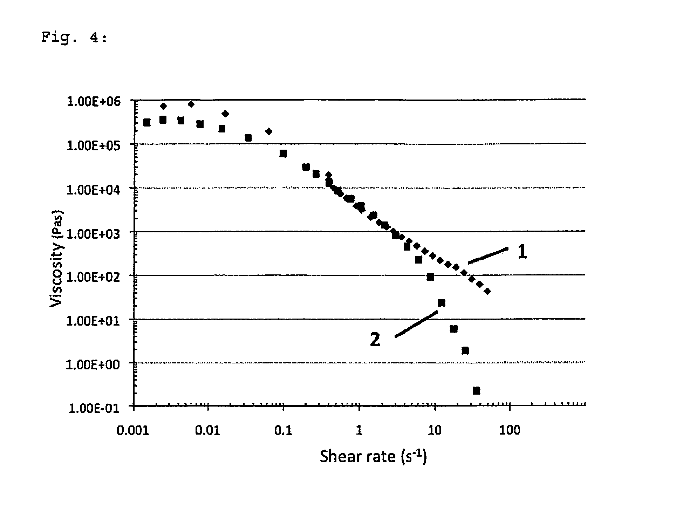

In Fig. 4 the difference in flow behaviour between a conventional gel 1 and the invention use of the same conventional gel as starting material is shown, measured with a Physica MCR 300 rheometer with rippled plate/plate geometry. Again, the conventional gel 1 shows a firmer texture at very low shear rates. At higher shear rates, the invention shows much better fluidity then the conventional gel 1.

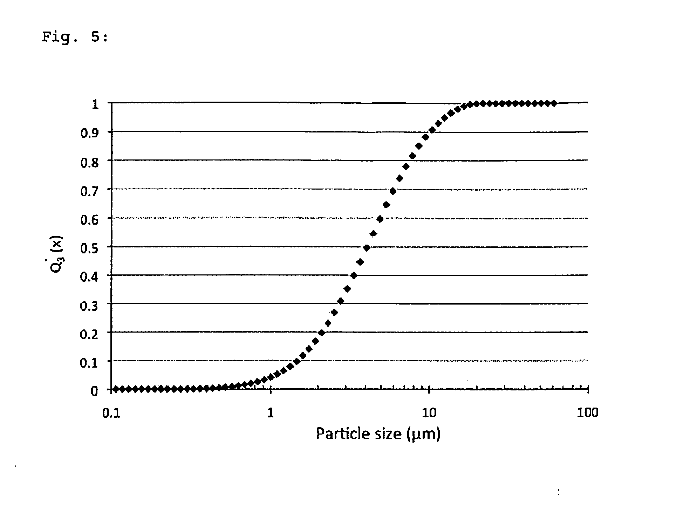

In Fig. 5, a typical particle size distribution of an agglomerated gel particle mass 2 is shown, with particles below 20 um. This is important since particles in this size range are invisible for the human eye and consequently the consumers perceive the invention as a continuous mass. Moreover, particles at this size range are not perceived in the mouth. For the measurement, a Beckman Coulter 1320, Frauenhofer program 780 was used.

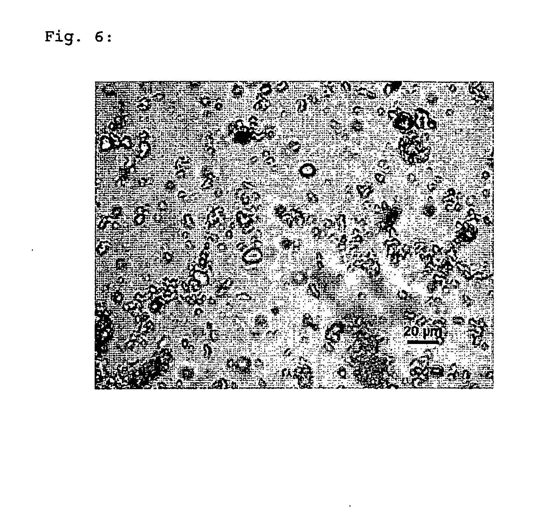

Fig. 6 shows a light micrograph of dispersed gel particles in water taken by a Nikon camera. The yellow-golden particles are gel particles, the brown particle cocoa solids. As can be seen, the gel particles are irregular in shape due to the milling process.

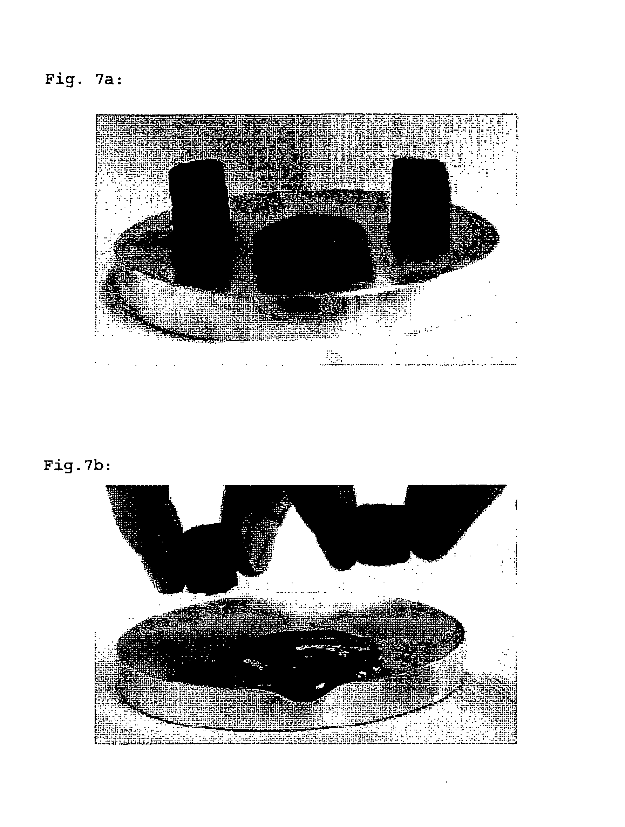

Figure 7 shows a heat stability test. Fig. 7a depicts two aggregated/agglomerated gel particle masses 2 (left and right side) and one milk chocolate piece in the middle before the heat test. Samples were put into a heat chamber for 2 hours and 45 minutes at 60°C. Fig. 7b shows samples after the test.

The chocolate is completely melted whereas the invention still kept its shape and can be still hand-held. The aggregated gel particles masses 2 were covered during the test to prevent evaporation.

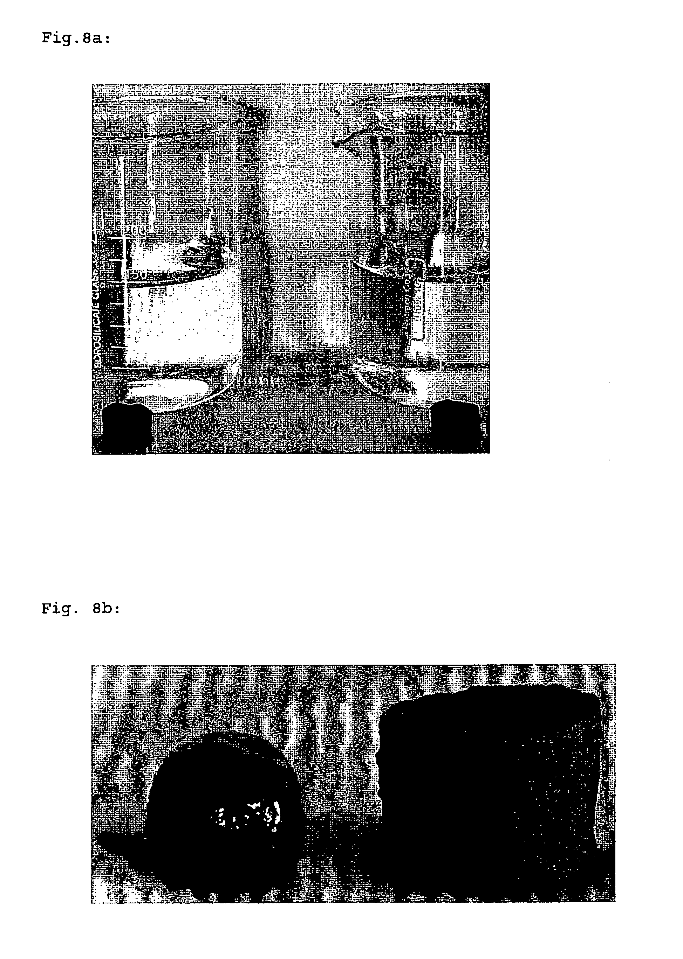

Fig. 8 simulates the disintegration process in the mouth. A conventional continuous gel 1 (right side Fig. 8a) and an aggregated gel particle mass 2 based on the same conventional continuous gel (left side Fig. 8a) of equal size were put into glass of water and then into a water bath with ultra sound treatment without additional stirring. Fig. 8b demonstrates the samples after 20 min.; on the left side the aggregated gel particle mass 2 and on the right side the conventional continuous gel 1. It can be seen that gel particles were pulled out of the macrostructure by ultra sound whereas the conventional gel 1 showed basically no change.

Agglomerated gel particle masses 2 can be also produced by atomization of a solution containing gel and structure forming biopolymer into a hot and humid chamber where gelatinization of the created droplets occur. Gel particles are then collected and pressed together under pressure to form an aggregated gel particle mass 2. Such gel particles have a spherical shape compared to an irregular one depict in the previous way of manufacturing.

Size of gel particles might differ depending on the product application. If gel particles should be seen and by human eye and perceived in the mouth, they must be greater then 50 um to several mm. If not, they must be smaller then 100 um, preferable smaller then 50 um.

It could be shown in additional tests that aggregated gel particle masses retained shape and hand-held/ oral disintegration properties after sterilization process, for example retorting at 121°C for 40 minutes. This opens the door of commercial products with very high moisture content and therefore low calorie content.

### EXAMPLES

The invention shall be described in more detail below with reference to some examples.

### Example 1

Cacao powder 25% by weight
skimmed milk powder 15% by weight
Sugar 25% by weight
Water 35% by weight

### Example 2

Cacao powder 7.5% by weight
Whey protein isolate 10% by weight
skimmed milk powder 5% by weight
Sugar 25% by weight
Water 52.5% by weight

### Example 3

Cacao powder 15% by weight
Whey protein isolate 5% by weight
skimmed milk powder 5% by weight
Milk fat 5% by weight
Sugar 25% by weight
Water 45% by weight

All 3 examples above where manufactured as following.

Ingredients were
(a) mixed and dissolved in a high shear mixer and then transferred to glass jars,
(b) sealed and cooked at 100°C for 60 min. to induce a continuous gel network.
(c) After cooling to room temperature, the conventional continuous gel was
(d) put into a blade mixer and ground to small gel particles. Optionally, liquids like water or heavy cream up to 10% by total weight of the gel particle mass was injected during milling to alter macro structural and sensory properties of the final product.
   Gel particles were then
(e) transferred into a top cut plastic syringe and compressed under pressure by the syringe piston.
The resulting aggregated gel particle mass was then packed and either frozen or heat sterilized. Water activity of such products was typically around 0.95.

In the previous section where the invention is described in detail, the term continuous gel or conventional continuous gel refers to the gel prior of cutting into small pieces. The term aggregated gel particle mass relates to final product described in example 1-3 prior to freezing or sterilization.

### Example 4

Cacao powder 10% by weight
Whey protein isolate 12% by weight
skimmed milk powder 5% by weight
Sugar 25% by weight
Water 48% by weight

Ingredients were mixed and dissolved in a high shear mixer and then transferred to glass jars, sealed and cooked at 100°C for 60 min. to induce a continuous gel network. The gel was then spread out on trays and put into a convection dryer at 40°C. After 2 days, the dried gel was removed from the dryer and ground to small particles in a hammer mill. The resulting dried gel particles were then transferred to a top cut plastic syringe and compressed under pressure by the syringe piston. The resulting aggregated dried gel particle mass was exposed in a climate chamber to 62% relative humidity at room temperature.

After 4 weeks, product was airtight packed. They could be eaten in this dry state. In an additional experiment, dried gel particles were not compressed and agglomerated but mixed with liquid like water or heavy cream under hand stirring. Dried gel particles took up moisture and at a certain liquid concentration, gel particle exhibit similar sensory properties as the ones prior to drying step. The so reconstituted gel particles were then agglomerated in a top cut plastic syringe and compressed under pressure by the syringe piston to an agglomerated gel particle mass at high moisture content.

### Example 5

Cacao powder 5% by weight
Whey protein isolate 2% by weight
skimmed milk powder 5% by weight
Xanthan 2% by weight
Locus gum 2% by weight
Sugar 20% by weight
Water 64% by weight

Ingredients were mixed and dissolved in a high shear mixer and then transferred to glass jars, sealed and cooked at 100°C for 60 min. to induce a continuous gel network. After cooling to room temperature, the conventional continuous gel was put into a blade mixer and ground to small gel particles. Gel particles were separated into 3 parts.

One part was then transferred into a top put plastic syringe and compressed under pressure by the syringe piston. The resulting aggregated gel particle mass was then packed and either frozen or heat sterilized. Another part was then spread out on trays and put into a convection dryer at 40°C. After 2 days, the dried gel was removed from the dryer and ground to small particles in a hammer mill. The resulting dried gel particles were then transferred to a top cut plastic syringe and compressed under pressure by the syringe piston. The resulting aggregated dried gel particle mass was exposed in a climate chamber to 62% relative humidity at room temperature.

After 4 weeks, product was airtight packed. A third part was dried as previously described and reconstituted to a aggregated gel particle mass of high moisture content as described above.

### Example 6

Commercially available hand-held low moisture gummi candy (gold-bears, Haribo) were cut into small pieces and further dispersed into smaller pieces in water by a high shear mixer. The water was then separated from the gel particles by centrifugation. Gel particles were then transferred into a top cut plastic syringe and compressed under pressure by the syringe piston. The resulting aggregated gel particle mass was then packed and either frozen or heat sterilized.

## Claims

1. A method for manufacture of food products, in particular a method for the production of an agglomerated gel particle food product having a preferred firm hand-held texture but disintegrate upon oral intake without mastication and therefore simulating melting behaviour producing a hand-held agglomerated gel, comprising at least biopolymers and water, which process comprises
a, mixing the constituents of the food product,
b, inducing a continuous gel network by thermal treatment if constituents do not form a gel network in the first process step a,
c, cooling the gel network to room temperature,
d, disperse this gel into small gel particles,
e, agglomerating these gel particles into a mass (2).

2. The method of claim 1, wherein the mass reached in process step e, is a hand-held mass.

3. The method of claim 1 or 2, wherein the dispersion step d, is a grinding or a spraying in an hot and humid environment, or mixing the constituents, spraying of the mix into a hot and humid environment were gel network building is induced, and subsequent agglomeration of these gel particles into a handheld mass.

4. The method of at least one of preceding claims 1 to 3, wherein the gel are dried to a water activity of 0.6 or higher and/or wherein the constituents optionally contain additional constituents.

5. The method of at least one of preceding claims 1 to 4, wherein during mixing a liquid is injected to the gel particle milling process to the degree that the final product is still hand-held.

6. The method of claim 1, wherein the hand-held agglomerated gel particle mass (2) further contains biopolymers and water and optionally containing additional constituents,
which process comprises mixing the constituents of the food product and inducing a starting continuous gel, drying this gel and grinding it to small dried gel particles, or mixing of these dried gel particles with a liquid to reconstitute similar high moisture levels, agglomerating these gel particles into a handheld mass.

7. A food product, having a hand-held agglomerated gel particle microstructure with disintegration properties upon oral intake without mastication.

8. The food product of claim 7, comprising at least one further constituent selected from the group consisting of nutrients, structure-forming agents, dietary and non-dietary fibers, flavorings, aromas, colorings and combinations thereof wherein gel particles may have an additional sub-microstructure in form of droplets, particles or gas bubbles.

9. The food product of claim 7, wherein the biopolymers are proteins or polysaccharides, and/or wherein the proteins are milk proteins and polysaccharides are starches and hydrocolloids.

10. The food product of claim 9 wherein the starches are of plant origin including cocoa starches and hydrocolloids are xanthan, carrageenan, locus gum or microcrystalline cellulose, the biopolymers are present in an amount in the range from 0.01 to 40% by weight and optionally containing fats in an amount of up to 30%, and/or wherein sweetener can be of nutritive or non-nutritive, natural or artificial nature in the range of 0.01 to 50%.

11. The food product of claim 7, wherein gel particles are of spherical or irregular shape and in the size range of 0.1 um to 1 mm, and/or wherein fruit-, vegetable-, nuts- or meat/fish particles are added to the gel particles.

12. The food product of claim 7 wherein the food product is chocolate, and/or made in the form of a sweet confectionary or dessert, or as a product having a savory or spicy flavour, and/or having the same or similar ingredients as chocolate.

13. The food product of claim 7, having a layer around the particles which consists of a liquid or crystallized fat which does not exceed 15% of total mass.

14. A retort or aseptically packaged food product, comprising a sterilized food product according to at least one of the preceding claims 11 to 20.

15. The product resp. hand-held aggregated gel particle mass (2) produced by at least one of the method claims 1 to 6, which is packed and sterilized or frozen.
